# EUROPÄISCHE PATENTANMELDUNG

(11) **EP 1 449 858 A2**
(43) Veröffentlichungstag der Anmeldung: **25.08.2004**
(21) Anmeldenummer: 04002871.4
(22) Anmeldetag: 10.02.2004
(51) Int. Cl.: C08F 8/42, C08K 5/00

(54) **Kondensationsvernetzende Siliconmasse**

(30) Priorität: 13.02.2003 DE 10305882
(71) Anmelder: Hermann Otto GmbH, 83411 Fridolfing (DE)
(72) Erfinder: Auer, Nikolaus, 84489 Burghausen (DE); Lutz, Jürgen, 83410 Laufen (DE); Meister, Darius, 84524 Neuötting (DE)
(74) Vertreter: Wagner, Jutta, Dr.

(57) **Zusammenfassung**

Die erfindungsgemäße kaltvulkanisierbare Siliconkautschukmasse besteht aus zwei getrennt voneinander aufbewahrten Komponenten A und B, die zur Anwendung vermischt werden, wobei
a) ein Produkt aus einem bifunktionellen Siliconpolymer der Formel 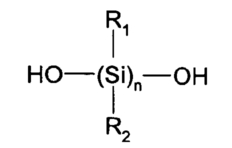 mit endständigen Hydroxylgruppen, in der
   n = 50 - 1.500
   R₁, R₂ = gesättigte oder ungesättigte Kohlenwasserstoffreste mit 1-15 C-Atomen bedeuten,
b) ein Reaktivprodukt aus trifunktionalen Silan-Vernetzern,
c) ein Wasserdonator und
d) übliche Hilfsstoffe enthalten sind, wobei als Wasserdonator c) ein pyrogenes Metalloxid enthalten ist und die Komponente A aus den Produkten a) und b) oder c) und die Komponente B aus dem übrig bleibenden Produkt c) oder b) besteht, wobei die Hilfsstoffe d) in beiden Komponenten enthalten sein können. Die Erfindung betrifft ferner die Verwendung der Siliconkautschukmasse als Dichtungs-, Beschichtungs- und Verbindungsmasse.

## Beschreibung

Die Erfindung betrifft eine kondensationsvernetzende Siliconmasse aus einer Mischung von mindestens bifunktionell terminierten Organo-Polysiloxanen und Vernetzungsmitteln und bifunktionellen oder trifunktionellen Silanvernetzern, sowie gegebenenfalls üblichen Hilfsstoffen, sowie einem die Kondensationsreaktion auslösenden Katalysator, wobei Polysiloxan und Vernetzungsmittel in zwei getrennten Komponenten vorliegen, welche üblicherweise als 2-K-Silicon bezeichnet werden.

Kaltvulkanisierende Siliconkautschukmassen vulkanisieren üblicherweise bei Raumtemperatur in Anwesenheit von Wasser, welches bei einkomponentigen Siliconkautschuken aus der umgebenden Atmosphäre stammt und bei zweikomponentigen Siliconkautschuken (2-K-Silicon) in Spuren über eine der Komponenten der Mischung zugegeben wird, wodurch eine rasche Vulkanisation der Mischung auch im Inneren stattfindet.

Die Zugabe von Wasser und die möglichst gleichmäßige Verteilung in der Polysiloxanmasse ist aber bekanntermaßen sehr problematisch, weil derartige Polysiloxanmischungen äußert hydrophob sind, so dass sich die wasserhaltige Komponente normalerweise ungleichmäßig verteilt.

Aus der DE-OS-23 33966 ist bekannt, der Siloxanmischung zusätzlich in größeren Mengen organische Lösemittel wie Dioxan oder andere wassermischbare Lösemittel beizumischen und das zur Kondensation dienende Wasser als 10 %-ige Lösung in Dioxan oder einem anderen Lösemittel zu vermischen und unterzumischen, um so ein schnell reagierendes Zweikomponentensystem zu erhalten. Abgesehen davon, dass diese Lösemittel unter Umwelt- und Gesundheitsaspekten zu vermeiden sind, erhält man auf diese Art und Weise gegenüber einer Vernetzung mit Luftfeuchtigkeit auf die Dauer wesentlich weichere Massen, auch nachdem dass Lösemittel verdampft ist.

Aus der EP 0 118 325 B2 ist bekannt, einer acetoxisilanvernetzenden Polysiloxanmischung gegebenenfalls wasserhaltige Alkali- und/oder Erdalkalihydroxide zuzusetzen, welche unter Bildung von Alkaliacetaten das für die Polymerisation notwendige Wasser (Kristallwasser) freisetzen und somit als Polymerisationsbeschleuniger wirken. Das gebildete Acetat verbleibt in der Polymermatrix und hat häufig einen negativen Einfluss auf die stofflichen Endeigenschaften des so vulkanisierten Siliconkautschuks.

In beiden vorstehenden Fällen handelt es sich nicht um eigentliche 2-K-Siliconmischungen, da die Siliconkomponente allein mit Luftsauerstoff kondensieren kann und somit eigentlich ein Einkomponentensystem mit dem Nachteil der begrenzten Lagerfähigkeit darstellt und nur zur Beschleunigung der Vulkanisation eine feuchtigkeitsvermittelnde zweite Komponente zugefügt wird.

Aus der EP 1 102 815 B1 sind 2-K-Siliconmassen bekannt, welche aus einem Diorganopolysiloxan und einem Acetoxisilanvernetzungsmittel bestehen und als Beschleuniger ein basisches Neutralsalz, welches Wasser, gegebenenfalls als Kristallwasser, enthält. Polysiloxan, Acetatvernetzer und Katalysator sind in 1-3 Komponenten separiert und werden kurz vor der Anwendung miteinander vermischt.

Aus der DE 198 32 688 A1 sind entsprechende Siliconmassen bekannt, welche aus bifunktionell terminierten Organopolysiloxanen, Aminosilan-, oder -Ethoxisilan-, Silanooxim oder Vernetzungsmitteln aufgebaut sind und saure oder basische Neutralsalze als beschleunigende Vernetzungsmittel enthalten. Die für die Kondensation nötigen Mengen von Wasser werden entweder als Kristallwasser des Beschleunigers zugefügt oder können in Form von an Zeolite oder Kieselgele oder Füllstoffoberflächen absorbiertem Wasser zugefügt werden.

Aus der DE 198 32 686 A1 sind weitere kondensationsvernetzende 2-K-Siliconmischungen aus bifunktionell terminierten Diorganopolysiloxanen, Acetoxisilanvernetzungsmitteln und Neutralsalzen des Eisens oder Aluminiums, insbesondere Aluminiumalaune des Ammoniums und der Alkalimetalle bekannt, wobei wiederum Wasser in Form von Kristallwasser oder eingeschlossen in Zeolite oder absorbiert an die Oberfläche von Füllstoffen, beispielsweise Calciumcarbonat zugegeben werden kann. Die Mischungen werden in mindestens 2 Komponenten gelagert um eine Reaktion während der Lagerung zu verhindern.

Aus der DE 41 37 698 A1 sind ferner 2-K-Siliconmassen bekannt, bei denen bifunktionelle Organopolysiloxane, welche gegebenenfalls als Endgruppen Triorganosiloxygruppen aufweisen und Imino- oder Aminosilane sowie trifunktionelle Silane als Vernetzer aufweisen, die mit Organozinnverbindungen als Katalysator (vorzugsweise Dibutylzinndiacetat) zur Reaktion gebracht werden. Diese Umsetzungsprodukte aus Katalysator und Vernetzer werden in einem separaten Verfahren bei erhöhten Temperaturen gewonnen. Daraus resultiert ein sehr aufwendiges Herstellungsverfahren bei dem letztendlich 2-K-Siliconmassen gewonnen werden, welche eine gute Beständigkeit gegenüber Heißwasser und Wasserdampf ausweisen, aber in der Temperaturbeständigkeit oberhalb von 200 °C keine Vorteile zeigen.

Die vorstehend beschriebenen 2-K-Siliconmassen härten durch den Zusatz eines Wasserdonators zwar alle innerhalb kurzer Zeit, unabhängig von der Luftfeuchtigkeit aus, weisen aber im Falle von kreidegefüllten Systemen eine ungenügende Temperaturstabilität auf, insbesondere verspröden sie nach wenigen Tagen Lagerung bei hohen Temperaturen. Lediglich bei den beschleunigten 1-K-Systemen können geeignete Füllstoffe zur Temperaturstabilisierung, wie sie in 1-K-Systemen zum Einsatz kommen, eingesetzt werden.

Die der Erfindung zugrunde liegende Aufgabe bestand daher darin, einen Bausatz bestehend aus zwei Komponenten zu formulieren, welcher alle für einen einsatzfähigen Kleb- oder Dichtstoff und durch Vermischen der beiden Komponenten ohne zusätzliche Zugabe von Wasser eine rasche Vulkanisation eintritt, wobei ein temperaturbeständiger Siliconkautschuk gebildet wird.

Die Lösung dieser Aufgabe wird durch die Merkmale des Hauptanspruchs gegeben und durch die Merkmale der Unteransprüche verbessert.

Es ist bekannt, dass Metalloxide die Temperaturbeständigkeit von Siliconkautschuken verbessern. Überraschenderweise wurde nun jedoch gefunden, dass spezielle Metalloxidpulver, insbesondere pyrogen hergestellte Metalloxidpulver aus Aluminium, Titan, Eisen oder Zink bzw. deren Mischoxide, welche einen Feuchtigkeitsgehalt von über 0,05 %, insbesondere einen Feuchtigkeitsgehalt von 0,1-5 %, vorzugsweise 0,1-0,5 %, aufweisen, geeignet sind, die für die schnelle und vollständige Vulkanisation einer 2-K-Siliconmasse notwendige Feuchtigkeit in ein solches System einzubringen, mittels des Füllstoffes gleichmäßig im gesamten System zu verteilen ohne dass zusätzlich Wasser in flüssiger Form zugefügt werden muss.

Die mit diesem System hergestellten Siliconmassen zeigen eine sehr gute Temperaturbeständigkeit des vulkanisierten Siliconkautschuks, welcher ähnlichen Produkten bei denen die Feuchtigkeit durch Zusatz anderer wasserhaltiger Füllstoffe wie Kreide, Kieselgel, Zeolite etc. eingebracht wird, überlegen sind.

Weiterhin zeigt sich, dass derartige Bausätze welche 0,5-50 %, vorzugsweise 10-40 % der pyrogenen Metalloxidpulver, die auch als Füllstoffe wirken, enthalten, trotz einer sehr raschen Vulkanisation innerhalb von wenigen Minuten eine hervorragende Eigenhaftung zeigen. Die zu vermischenden Komponenten sind vorzugsweise flüssig oder fließfähig, um eine rasche Vermischung zu garantieren.

Die erfindungsgemäße kaltvulkanisierbare Siliconkautschukmasse besteht aus zwei getrennt voneinander aufbewahrten Komponenten A und B, die zur Anwendung vermischt werden, wobei
a) ein Produkt aus einem bifunktionellen Siliconpolymer der Formel 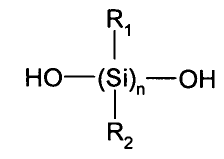 mit endständigen Hydroxylgruppen, in der
   n = 50 - 1.500 ist, vorzugsweise 500-1.000,
   R₁, R₂ = gesättigte oder ungesättigte Kohlenwasserstoff-Reste mit 1-15 C-Atomen, bedeuten,
b) ein Reaktivprodukt aus trifunktionalen und/oder tetrafunktionalen Silan-Vernetzern,
c) ein Wasserdonator und
d) übliche Hilfsstoffe
enthalten sind, wobei als Wasserdonator c) ein pyrogenes Metalloxid enthalten ist und die Komponente A aus dem Produkt a) und b) oder c) und die Komponente B aus dem übrig bleibenden Produkt c) oder b) besteht, wobei die Hilfsstoffe d) in beiden Komponenten enthalten sein können.

Die Gruppen R1 und R2 sind vorzugsweise niedere Alkylgruppen, insbesondere Methyl-, Ethyl- oder Propylgruppen. In einer weiteren bevorzugten Ausführungsform sind die Gruppen R1 und R2 ungesättigte Kohlenwasserstoffreste, insbesondere wie Vinyl- oder Arylreste. Die Reste R1 und R2 können auch Halogensubstituenten tragen.

Bei den bifunktionellen Siliconpolymeren wird n so eingestellt, dass die durchschnittliche Viskosität des bifunktionellen Siliconpolymeren bei 25 °C 1000 bis 350.000 mPas beträgt.

Als Vernetzer werden Acetoxy-, Oximo-, Alkoxy-, Caprolactam-, Amin-, Amid- und Ketongruppen abspaltende Silane oder Mischungen davon eingesetzt. Bevorzugt sind Verbindungen der allgemeinen Formeln 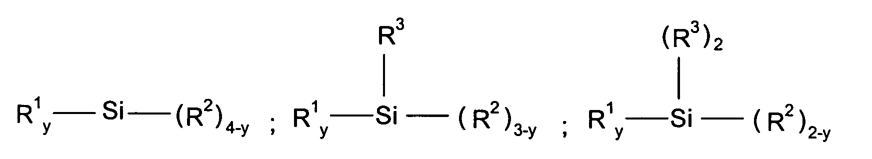 wobei y = 0 oder 1 ist,
R¹ für Wasserstoff oder einen einwertigen gesättigten oder ungesättigten Alkyloder Alkoxyrest steht und R² und R³ unabhängig voneinander für Acetoxy-, Oximo-, Alkoxy-, Caprolactam-, Amin-, Amid- oder Keton stehen.

Als Hilfsstoffe werden Zusätze aus der Gruppe Siliconweichmacher, Haftmittel, Füllstoffe und/oder Additive wie Farbstoffe, Emulgatoren, Stabilisatoren und Katalysatoren verwendet.

Üblicherweise bestehen die beiden Komponenten dieses Bausatzes aus einer Komponente A welche
40-80 % bifunktional terminiertes Organopolysiloxan,
0-20 % Siliconweichmacher,
0-40 % Füllstoffe und
10-30 % pyrogenes Metalloxid enthält,
sowie einer Komponente B, welche aus
3-50 % eines Silanvernetzers ausgewählt aus der Gruppe der Aminosilane, Alkoxysilane, Oximsilane, Caprolactamsilane, Amidsilane, Alkenoxysilane, Acetoxysilane,
5-50 % Füllstoffen, sowie
20-60 % Siliconpolymeren,
0,1-1 % eines Katalysators, insbesondere einer Zinnverbindung,
bis zu 20 %, insbesondere 0,1-10 % eines Haftadditives besteht.

Dieser Bausatz hat den Vorteil, dass die Komponente A, welche das Organopolysiloxan enthält, nicht unter Ausschluss von Luftfeuchtigkeit hergestellt und gelagert werden muss. Mischungen, bei denen Siliconpolymer und Vernetzer die eine Komponente und Metalloxid und gegebenenfalls Silicon die andere Komponente bilden, können dagegen als 1-K-Siliconkleber mit Luftfeuchtigkeit reagieren, so dass sie unter Luftausschluss gelagert werden müssen.

Den Mischungen der Komponenten A und/oder B können weitere Hilfsstoffe zur Erzielung weiterer Eigenschaften zugegeben werden. Zu nennen sind hier insbesondere Farbpigmente und lösliche Farbstoffe, Stabilisatoren gegen Oxidation und Hitzeeinwirkung, Dispergatoren, Reaktionskatalysatoren, Fungizide, Haftvermittler, Lösungsmittel, Flammschutzmittel, Weichmacher (vorzugsweise Siliconöle oder auf Kohlenwasserstoffbasis) jeweils in Mengen bis zu 20 %, vorzugsweise 5 - 20 %, verstärkende Füllstoffe, beispielsweise hochdisperse oder gefällte Kieselsäuren, Grafit, Russ sowie passive Füllstoffe, wie z. B. Calciumcarbonat, Silikate, Quarzmehl, Glas- oder Carbonfasern, Diatomeenerde, Metallpulver oder Fasern oder Metalloxide, sowie Kunststoffpulver oder Fasern, sowie Hohlkugeln aus Glas- oder Kunststoffen in Mengen bis zu 50 %, vorzugsweise 10-30 %. Um die Füllstoffe besser in der Masse verteilen zu können, kann es vorteilhaft sein, diese zunächst durch Überzug mit einer entsprechenden Masse zu hydrophobieren.

Soweit nicht anders vermerkt, beziehen sich alle %-Angaben auf Gewichts-%.

### Beispiel 1:

| **Komponente A wurde erhalten durch Vermischen von** | | **Komponente B wurde erhalten durch Vermischen von** | |
|---|---|---|---|
| Gewichts-[%] | Rohstoff | Gewichts-[%] | Rohstoff |
| 60% | Siliconpolymer | 20,0 % | Silicon-Weichmacher |
| 10% | Siliconweichmacher | 28,0 % | Oximosilan Vernetzer |
| 5% | Füllstoff | 10,0 % | Aminosilanhaftvermittler |
| 25% | pyrogenes Metalloxid | 8,0 % | pyrogene Kieselsäure |
| 100% | | 33,5 % | Füllstoffe |
| | | 0,5 % | Katalysator |
| | | 100 % | |
| Mischungsverhältnis A/B = 10/1 | | | |

### Beispiel 2:

| **Komponente C wurde erhalten durch Vermischen von** | | **Komponente D wurde erhalten durch Vermischen von** | |
|---|---|---|---|
| Gewichts-[%] | Rohstoff | Gewichts-[%] | Rohstoff |
| 60% | Siliconpolymer | 45 % | Siliconpolymer |
| 4,5% | Silan Vernetzer | 10% | Siliconweichmacher |
| 1,0% | Aminosilanhaftvermittler | 5 % | Füllstoff |
| 5,0% | pyrogene Kieselsäure | 40 % | pyrogenes Metalloxid |
| 29,4% | Füllstoffe | 100% | |
| 0,1 % | Katalysator | | |
| 100 % | | | |
| Mischungsverhältnis C/D = 10/1 | | | |

### Beispiel 3:

Messung der Hochtemperaturbeständigkeit:

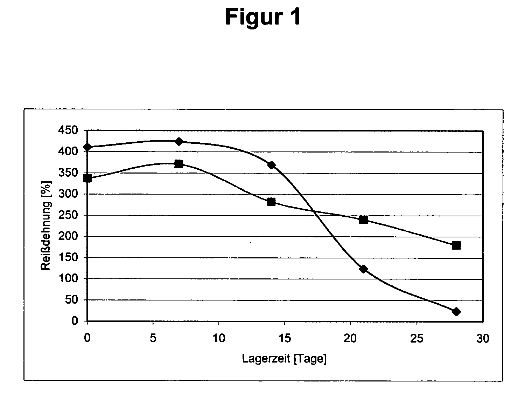

Zur Bestimmung der Temperaturbeständigkeit wurden gemäß Ausführungsbeispiel 1 hergestellte Produkte mit solchen verglichen, in denen das pyrogene Metalloxid gegen gefällte Kreide in gleicher Menge, welche eine ähnlich hohe spezifische Oberfläche und gleiche Feuchte von ca. 0,5 % aufweist, ausgetauscht wurde.
Die Probekörper wurden nach der Herstellung 14 Tage bei Raumtemperatur gelagert und danach 0-28 Tage auf 200° bis 250° C erwärmt. Die Ergebnisse sind in Tabelle 1 und Figur 1 dargestellt. In Figur 1 stehen die Quadrate für erfindungsgemäßes Silikon die Rauten für das Vergleichssystem. Aus der Tabelle bzw. der Figur 1 geht hervor, dass die mit feuchter Kreide gehärteten Systeme zwar eine größere Ausgangshärte aufweisen, jedoch bereits bei einer Temperatur von 200° C bereits nach 28 Tagen weitgehend versprödet sind, während die erfindungsgemäßen Produkte auch bei einer Lagerung bei 250° C nach dieser Zeit noch über die Hälfte ihrer Elastizität aufweisen.

**Tabelle 1:**

| 250°C-Lagerung Reißdehnung [%] | | |
|---|---|---|
| Lagertemperatur | 200°C | 250°C |
| Lagerzeit [Tage] | 2-K-System mit gefällter Kreide | 2-K-System mit pyrogenen Metalloxid |
| 0 | 411 | 337 |
| 7 | 424 | 371 |
| 14 | 369 | 282 |
| 21 | 124 | 240 |
| 28 | 24 | 180 |

### Beispiel 4:

Shore A Härteversuch:

Für das Produkt gemäß Beispiel 1 und ein analog hergestelltes, bei dem dasselbe Metalloxid, aber nicht pyrogen hergestellt, verwendet wurde, wurden U-Profile mit dem jeweiligen Silicon befüllt und nach den in Tabelle 2 angegebenen Zeiten jeweils die Shore A-Härte an der Oberfläche und im Innern bestimmt. Für die letztgenannte Messung wurden Teile aus den U-Profilen geschnitten.

**Tabelle 2:**

| **Shore-A-Härte-Verlauf 2-K-Silicon OBERFLÄCHE** | | |
|---|---|---|
| Zeit [h] | mit pyrogenen Metalloxid | mit nicht pyrogenen Metalloxid |
| 0 | 0 | 0 |
| 2 | 7 | 1 |
| 4 | 14 | 5 |
| 6 | 22 | 7 |
| 8 | 25 | 9 |
| 24 | 35 | 15 |
| 48 | 41 | 25 |
| 96 | 41 | 38 |
| | | |

| **Shore-A-Härte-Verlauf 2- K-Silicon INNEN** | | |
|---|---|---|
| Zeit [h] | mit pyrogenen Metalloxid | mit nicht pyrogenen Metalloxid |
| 0 | 0 | 0 |
| 2 | 7 | 1 |
| 4 | 14 | 1 |
| 6 | 22 | 1 |
| 8 | 25 | 1 |
| 24 | 32 | 1 |
| 48 | 40 | 1 |
| 96 | 41 | 1 |

Man erkennt, dass nur bei dem erfindungsgemäßen Produkt eine Durchhärtung in akzeptabler Zeit erfolgt. Bei dem Vergleichsprodukt ist nur an der Oberfläche eine akzeptable Vernetzung feststellbar.

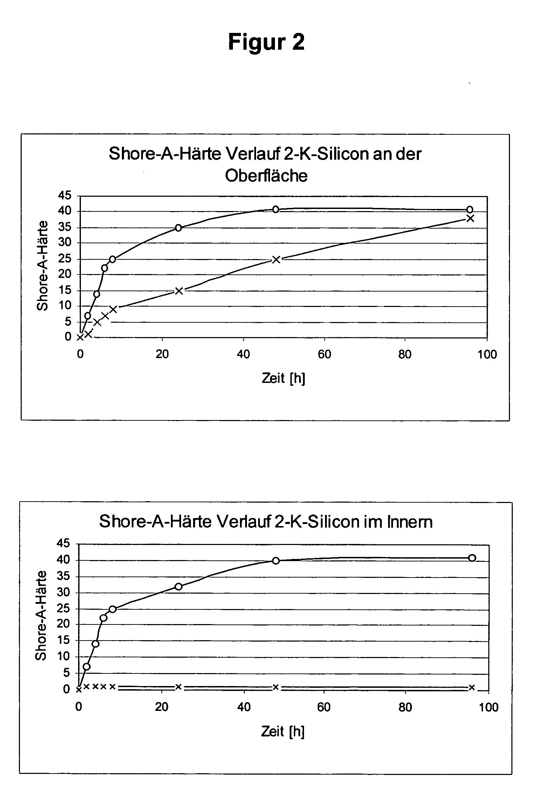

Die Ergebnisse sind zusätzlich in Figur 2 veranschaulicht, bei der das erfindungsgemäße Produkt durch Kreise, das Vergleichsprodukt durch Kreuze bezeichnet ist.

## Patentansprüche

1. Kaltvulkanisierbare Siliconkautschukmasse, die aus zwei getrennt voneinander aufbewahrten Komponenten A und B besteht, die zur Anwendung vermischt werden, wobei
a) ein Produkt aus einem bifunktionellen Silicon polymer der Formel 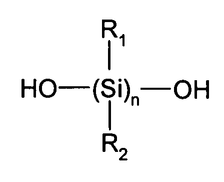 mit endständigen Hydroxylgruppen, worin
n = 50 - 1.500
R₁, R₂ = gesättigte oder ungesättigte Kohlenwasserstoff-Reste mit 1-15
C-Atomen bedeutet,
b) ein Reaktivprodukt aus trifunktionalen und/oder tetrafunktionalen Silan-Vernetzern,
c) ein Wasserdonator und
d) übliche Hilfsstoffe
enthalten sind, **dadurch gekennzeichnet, dass** als Wasserdonator c) ein pyrogenes Metalloxid enthalten ist und die Komponente A aus den Produkten a) und b) oder c) und die Komponente B aus dem übrig bleibenden Produkt c) oder b) besteht, wobei die Hilfsstoffe d) in beiden Komponenten enthalten sein können.

2. Kaltvulkanisierbare Siliconkautschukmasse gemäß Anspruch 1 **dadurch gekennzeichnet, dass** als Vernetzer b) Acetoxy-, Oximo-, Alkoxy-, Caprolactam-, Amin-, Amid- und Ketongruppen abspaltende Silane oder Mischungen davon enthalten sind.

3. Kaltvulkanisierbare Siliconkautschukmasse gemäß einem der Ansprüche 1-2 **dadurch gekennzeichnet, dass** als Hilfsstoff mindestens ein Zusatz aus der Gruppe Siliconweichmacher, Haftmittel, Füllstoffe und/oder Additive wie Farbstoffe, Emulgatoren, Stabilisatoren und Katalysatoren enthalten ist.

4. Kaltvulkanisierbare Siliconkautschukmasse nach einem der Ansprüche 1-3 **dadurch gekennzeichnet, dass** dem pyrogenem Metalloxid c) zusätzlich 0,1-5 % Wasser beigemengt ist.

5. Kaltvulkanisierbare Siliconkautschukmasse nach einem der Ansprüche 1-4, **dadurch gekennzeichnet, dass** die erste Komponente Siliconpolymere a), Metalloxide c) und Hilfsstoffe d) und die zweite Komponente Silanvernetzer b) und Hilfsstoffe d) enthält.

6. Kaltvulkanisierbare Siliconkautschukmasse nach einem der vorhergehenden Ansprüche, **dadurch gekennzeichnet, dass** die Komponenten flüssig oder fließfähig sind.

7. Kaltvulkanisierbare Siliconkautschukmasse nach einem der vorhergehenden Ansprüche, **dadurch gekennzeichnet, dass** die Siliconpolymere a) und die Silane b) in einem Mengenverhältnis von 40/1 bis 1/1, vorzugsweise 20/1 bis 1/1 in den vermischten Komponenten enthalten sind.

8. Verwendung einer Siliconkautschukmasse nach einem der Ansprüche 1-7 als Dichtungs-, Beschichtungs- und Verbindungsmasse.
